# FASCICULE DE BREVET EUROPEEN

(11) **EP 1 105 982 B1**
(45) Date de publication et mention de la délivrance du brevet: **09.04.2003**
(21) Numéro de dépôt: 99936756.8
(22) Date de dépôt: 19.08.1999
(51) Int. Cl.: H04B 7/26, H04B 1/707

(54) **PROCEDES DE COMMUNICATIONS NUMERIQUES AMRC A REPARTITION DES SYMBOLES DE REFERENCE**
METHODEN ZUR DIGITALEN CDMA NACHRICHTENÜBERTRAGUNG MIT VERTEILUNG VON REFERENZSYMBOLEN
CDMA DIGITAL COMMUNICATION METHODS WITH DISTRIBUTED REFERENCE SYMBOLS

(30) Priorité: 20.08.1998 FR 9810579
(43) Date de publication de la demande: 13.06.2001
(73) Titulaire: FRANCE TELECOM, 75015 Paris (FR)
(72) Inventeur: SIALA, Mohamed, F-92140 Clamart (FR); DUPONTEIL, Daniel, F-92170 Vanves (FR)
(74) Mandataire: Poulin, Gérard
(86) Numéro de dépôt international: FR9902012
(87) Numéro de publication internationale: WO00011814

(56) Documents cités:
- WO-A-95/12938
- WO-A-97/45970
- US-A- 5 414 728
- US-A- 5 751 763
- US-A- 5 767 738

## Description

### Domaine technique

La présente invention a pour objet des procédés de communications numériques de type AMRC (Accès Multiple à Répartition par Codes) avec répartition des symboles de référence. Ces procédés concernent tant l'émission que la réception de messages.

L'invention trouve une application dans les systèmes de radiocommunications mobiles terrestres. Elle peut s'appliquer dans les systèmes de troisième génération UMTS et IMT-2000.

### Etat de la technique

Les systèmes de communications numériques peuvent être classés en deux catégories principales, selon qu'ils mettent en oeuvre une transmission par paquet ou une transmission en continu. Les systèmes à accès multiple à répartition dans le temps (AMRT) font partie de la première catégorie. C'est, entre autres, le cas des systèmes GSM et DECT. Les systèmes à accès multiple à répartition par codes (AMRC) font partie de la seconde catégorie. C'est le cas, par exemple du système IS'95.

Dans tous ces systèmes, la résolution des problèmes liés à la connaissance des caractéristiques du canal de propagation est facilitée par l'introduction de symboles de référence (ou symboles pilotes) ou/et de canaux pilotes.

Les systèmes AMRT se limitent actuellement aux traitements de deux cas extrêmes : canaux très sélectifs en fréquence (étalement des délais très important) mais non sélectifs en temps (étalement Doppler négligeable) et canaux non sélectifs en fréquence mais pouvant éventuellement être très sélectifs en temps. Le premier cas est souvent rencontré dans les systèmes radiomobiles terrestres tels que le GSM. Le deuxième est plutôt rencontré dans des systèmes radiomobiles par satellite tels que ICO et IRIDIUM.

Dans le cas des systèmes AMRT de communications par satellite, les symboles de référence sont répartis sur chaque paquet de données pour être adaptés au mieux au canal à évanouissements très rapides. Cette répartition des symboles de référence a été utilisée avec succès dans le cadre du projet ICO. Une répartition régulière de ces symboles est décrite par exemple dans FR-A-2 747 870.

Dans le cas des systèmes de communications terrestres AMRT, les symboles de référence sont au contraire regroupés au milieu de chaque paquet de données, pour pouvoir estimer plus simplement et plus efficacement la réponse impulsionnelle du canal multi-trajets généralement très sélectif en fréquence mais peu ou pas sélectif en temps.

Dans la technique AMRC, les symboles à transmettre sont préalablement multipliés par des séquences (ou codes) pseudo-aléatoires, ce qui a pour effet d'étaler leur spectre. A la réception, le signal reçu est désétalé par un filtrage adapté à la séquence utilisée à l'émission (ou par corrélation) puis démodulé.

Cette technique permet à plusieurs utilisateurs d'emprunter un même canal de radiocommunications, à condition qu'on attribue à chacun une séquence particulière. En terminologie anglo-saxonne, cette technique est appelée "Code Division Multiple Access" ou CDMA en abrégé.

Dans la pratique, le signal AMRC comprend deux composantes, une composante dite en phase (ou réelle) et notée classiquement I et une composante dite en quadrature de phase (ou imaginaire) et notée classiquement Q. Chaque composante est obtenue par étalement de spectre de symboles puis modulation d'une porteuse qui est soit en phase avec une porteuse de référence (composante I), soit en quadrature avec cette même porteuse de référence (composante Q). A la réception, on traite séparément le signal reçu dans deux voies distinctes I et Q et on regroupe les informations restituées.

On peut trouver une description de cette technique dans l'ouvrage général de J.G. PROAKIS, intitulé "Digital Communications", 3^{ème} édition, McGRAW-HILL, 1995, (troisième édition) 1989 (deuxième édition).

Chacune des voies I et Q d'un signal AMRC comprend des symboles d'information et des symboles de référence (ou pilotes) pour permettre l'estimation du canal, comme en AMRT.

Les systèmes AMRC introduisent en outre le concept de période de contrôle de puissance (PCP). La puissance du signal envoyé par l'émetteur reste constante durant chaque PCP mais peut varier d'une PCP à l'autre pour contrecarrer les évanouissements lents (dus à la distance et aux effets de masque), ainsi que les évanouissements rapides dus aux effets des trajets multiples lorsque le terminal se déplace lentement (sélectivité en temps).

Dans le cas des systèmes AMRC classiques, les symboles de référence sont regroupés au début de chaque PCP. Ces symboles de référence permettent, par corrélation, une estimation des trajets au début de chaque PCP. Cette estimation est ensuite utilisée dans le reste de la PCP pour démoduler au mieux les symboles d'information de chacun des trajets et les recombiner en vue de la prise de décision.

Pour un mouvement lent du terminal et donc une sélectivité en temps faible, l'estimation des trajets pour une PCP donnée peut être consolidée par moyennage pondéré ou non avec celles d'un nombre fini de PCP précédentes.

Les systèmes AMRC existants utilisent soit une PCP de durée fixe, soit une PCP de durée variable pour s'adapter à la rapidité des évanouissements observés sur le canal. Dans les deux cas, les symboles de référence sont regroupés, en général au début de chaque PCP.

Le regroupement des symboles de référence possède l'inconvénient majeur de conduire à une estimation du canal localisée dans le temps, même si elle est de bonne qualité en raison même du nombre de symboles qui y contribuent. Il est alors très difficile de suivre les variations rapides des évanouissements (grandes vitesses de déplacement des mobiles et/ou utilisation de fréquences élevées). Les performances de transmission s'en trouvent dégradées.

L'inconvénient de la localisation des symboles de référence est partiellement effacé si le système peut utiliser plusieurs symboles de référence de plusieurs PCP. Cette solution, qui peut être jugée satisfaisante, ne peut être utilisée dans les liaisons en mode à fenêtre temporelle ("slot") où l'estimation doit être faite PCP par PCP.

L'utilisation de PCP courtes, conjointement avec des démodulateurs classiques, conduit à une diminution notable de la capacité de la liaison et donc du système, en raison du grand nombre de symboles de référence transmis pour assurer une bonne qualité de liaison.

Avec une demande soutenue de services nécessitant des débits de plus en plus forts, la bande d'étalement en fréquence des systèmes AMRC est sans arrêt revue à la hausse. Cette augmentation de la bande s'accompagne d'un accroissement continu du nombre de trajets reçus au niveau du récepteur. Cet accroissement du nombre de trajets conduit, pour une puissance reçue donnée, à une réduction de la puissance reçue par trajet et donc à une diminution de la qualité de l'estimation du canal global.

Comme les systèmes AMRC sont, par nature, limités par les interférences d'accès multiple, on ne peut compenser cette perte de performances par une augmentation de la puissance. Par ailleurs, l'augmentation du nombre des symboles de référence est une solution dommageable pour la capacité du système.

L'invention a justement pour but de remédier à ces inconvénients.

### Exposé de l'invention

La présente invention a pour but principal d'accroître les performances des systèmes AMRC en améliorant la qualité de la réception pour une puissance émise donnée et donc avec un niveau d'interférences d'accès multiple inchangé. Cette amélioration de la qualité permet, entre autres, d'augmenter la capacité et la couverture du système AMRC.

Cette amélioration est obtenue par une répartition judicieuse des symboles de référence entre les deux voies. Selon l'invention, les symboles de référence sont répartis dans une seule des deux composantes, soit la composante I soit la composante Q. En outre, les séquences pseudo-aléatoires d'étalement utilisées pour l'une des composantes sont différentes des séquences pseudo-aléatoires d'étalement utilisées pour l'autre. Cela permet de récupérer l'information liée aux symboles de référence contenus dans une voie sans perturber l'autre voie, et réciproquement.

L'utilisation de symboles de référence régulièrement répartis au long d'une PCP permet d'avoir une meilleure observation du canal de propagation, qui peut être mise à profit par le récepteur pour maintenir une qualité de liaison quasi constante quelle que soit la vitesse, et cela même pour des bandes occupées extrêmement larges. Dans ce récepteur, on ne traitera que la voie contenant les symboles de référence pour restituer l'information relative à ceux-ci à l'aide des séquences de désétalement propres à cette voie. Cette séparation des voies est propre à l'AMRC et ne peut pas se retrouver dans l'ARMT.

La répartition des symboles de référence dans l'une des deux composante permet d'observer et de suivre minutieusement et au mieux les variations du canal multi-trajets, de bout en bout, sur une plage temporelle donnée. En d'autres termes, elle permet de réaliser heuristiquement l'équivalent du théorème d'échantillonnage de Nyquist qui garantit une reconstruction parfaite d'un signal (un des trajets en l'occurrence) à bande étroite (étalement Doppler) à partir d'échantillons régulièrement répartis dans le temps (symboles de référence répartis donnant lieu à un échantillonnage régulier dans notre cas) pourvu que le rythme d'échantillonnage soit supérieur à la bande du signal.

Le maximum de fréquence Doppler observable est directement lié à la cadence des observations faites à travers l'information de référence. En conséquence, à nombre de bits de référence donné, il vaut mieux les répartir régulièrement sur une seule des composantes I ou Q du signal AMRC. On dispose alors d'une cadence d'observation accrue, ce qui présente bien sûr un avantage certain pour les Doppler importants.

Dans les systèmes mobiles terrestres actuels, les grandes fréquences Doppler sont dues à de grandes vitesses de déplacement du terminal. Mais on les observe à des vitesses de déplacement beaucoup plus faibles en association avec des bandes de fréquence élevées (5 GHz et au-delà) qui pourront ainsi être utilisées sans trop de difficultés.

En outre, on peut observer que des fréquences Doppler très importantes existent dans les systèmes à satellites.

Enfin, il faut observer que le fait de disposer d'informations régulières sur le canal de propagation ne présente pas uniquement de l'intérêt à l'égard du maximum de fréquence Doppler que l'on peut ainsi suivre. Il se trouve qu'à nombre de bits utilisés donné, il existe des procédés d'estimation qui fonctionnent mieux si ces bits sont régulièrement répartis. Un tel procédé est décrit et revendiqué par exemple dans la demande de brevet français déposée par le présent Demandeur le jour même du dépôt de la présente demande et intitulée "Récepteur râteau itératif et procédé de réception correspondant".

Un autre but de l'invention est de faciliter la réalisation des terminaux en les rendant beaucoup moins sensibles aux imprécisions de l'oscillateur local utilisé pour transposer le signal reçu en bande de base.

De façon plus précise, l'invention a donc pour objet un procédé de communications numériques de type à accès multiple à répartition par codes, dans lequel on émet un signal à deux composantes :
- une première composante obtenue par étalement de spectre de premiers symboles par des premières séquences pseudo-aléatoires et modulation d'une première porteuse en phase avec une porteuse de référence, cette première composante étant dite en phase et notée I,
- une seconde composante obtenue par étalement de spectre de seconds symboles par de secondes séquences pseudo-aléatoires et par modulation d'une seconde porteuse en quadrature de phase avec ladite porteuse de référence, cette seconde composante étant dite en quadrature et notée Q,
les symboles comprenant des symboles d'information et des symboles de référence,
ce procédé étant caractérisé en ce que les symboles de référence sont répartis dans une seule des deux composantes I ou Q et en ce que les premières séquences pseudo-aléatoires propres à la composante I sont différentes des secondes séquences pseudo-aléatoires propres à la composante Q.

Dans un mode de mise en oeuvre particulier, les symboles de référence sont répartis par groupes de plusieurs symboles (2 ou plus).

Dans un autre mode de mise en oeuvre, les symboles de référence sont répartis un par un.

L'invention a également pour objet un procédé de communications numériques de type à accès multiple à répartition par codes dans lequel on traite un signal émis selon le procédé qui vient d'être défini dans deux voies distinctes I et Q à l'aide de séquences pseudo-aléatoires différentes correspondant respectivement aux premières et secondes séquences utilisées à l'émission, ce procédé étant caractérisé en ce qu'on utilise les symboles de référence présents dans une seule des voies pour estimer les caractéristiques du canal de propagation.

### Brève description des dessins

- la figure 1 illustre une répartition des symboles de référence par groupe de deux ;
- la figure 2 illustre une répartition des symboles de référence un par un.

### Description de modes particuliers de réalisation

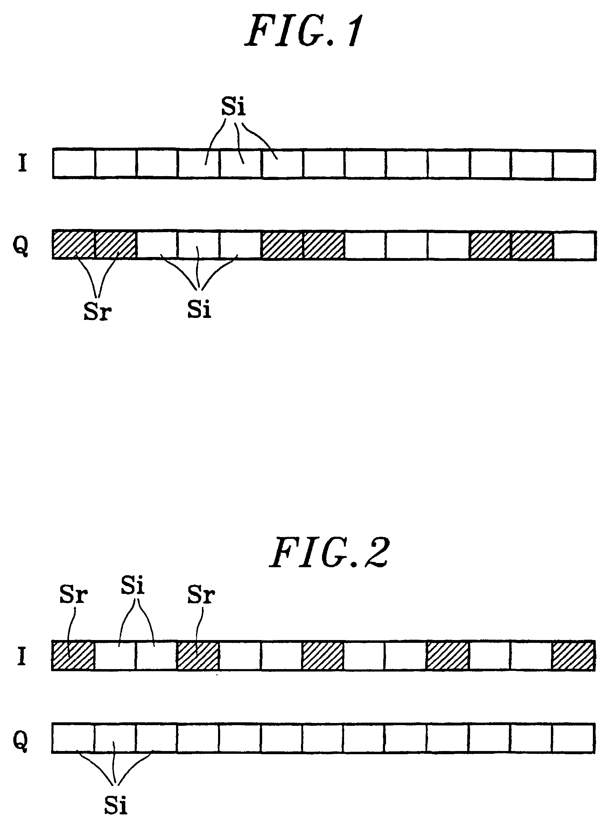

Les figures 1 et 2 annexées montrent symboliquement les deux composantes I et Q d'un signal AMRC. Les symboles de référence (ou pilote) sont référencés Sr et sont représentés hachurés, alors que les symboles d'information sont référencés Si et sont représentés en blanc.

Sur la figure 1, les symboles de référence Sr sont répartis uniquement dans la composante Q et sont rassemblés par groupes de 2. Sur la figure 2, les symboles de référence Sr sont répartis dans la voie I et sont disposés un par un.

## Revendications

1. Procédé de communications numériques de type à accès multiple à répartition par codes, dans lequel on émet un signal à deux composantes :
- une première composante obtenue par étalement de spectre de premiers symboles par des premières séquences pseudo-aléatoires et modulation d'une première porteuse en phase avec une porteuse de référence, cette première composante étant dite en phase et notée I,
- une seconde composante obtenue par étalement de spectre de seconds symboles par de secondes séquences pseudo-aléatoires et par modulation d'une seconde porteuse en quadrature de phase avec ladite porteuse de référence, cette seconde composante étant dite en quadrature et notée Q,
les symboles comprenant des symboles d'information (Si) et des symboles de référence (Sr),
ce procédé étant **caractérisé en ce que** les symboles de référence (Sr) sont répartis dans une seule des deux composantes I ou Q et **en ce que** les premières séquences pseudo-aléatoires propres à la composante I sont différentes des secondes séquences pseudo-aléatoires propres à la composante Q.

2. Procédé selon la revendication 1, dans lequel les symboles de référence (Sr) sont répartis par groupes de plusieurs symboles.

3. Procédé selon la revendication 1, dans lequel les symboles de référence (Sr) sont répartis un par un.

4. Procédé selon l'une quelconque des revendications 1 à 3, dans lequel les symboles de référence sont répartis au sein d'une même période de contrôle de puissance (PCP).

5. Procédé de communications numériques de type à accès multiple à répartition par codes dans lequel on traite un signal émis selon le procédé de la revendication 1 dans deux voies distinctes I et Q à l'aide de séquences pseudo-aléatoires différentes correspondant respectivement aux premières et secondes séquences utilisées à l'émission, **caractérisé en ce qu'**on on utilise les symboles de référence présents dans une seule des voies pour estimer les caractéristiques du canal de propagation.

## Claims

1. Code division multiple access type digital communication process in which a signal with two components is emitted:
- a first component obtained by spectrum spreading of first symbols by first pseudo-random sequences and modulation of a first carrier in phase with a reference carrier, this first component being said to be in phase and denoted I,
- a second component obtained by spectrum spreading of second symbols by second pseudo-random sequences and by modulation of a second carrier in phase quadrature with the said reference carrier, this second component being said to be in quadrature and denoted Q,
the symbols comprising information symbols (Si) and reference symbols (Sr),
this process being **characterized in that** the reference symbols (Sr) are distributed in only one of the two I or Q components, and **in that** the first pseudo-random sequences specific to the I component are different from the second pseudo-random sequences specific to the Q component.

2. Process according to claim 1, in which the reference symbols (Sr) are distributed in groups of several symbols.

3. Process according to claim 1, in which the reference symbols (Sr) are distributed one by one.

4. Process according to any one of claims 1 to 3, in which the reference symbols are distributed within a single power control period (PCP).

5. Code division multiple access type digital communications process in which a signal emitted according to the process according to claim 1 in two distinct I and Q channels is processed using different pseudo-random sequences corresponding to the first and second sequences used in transmission respectively, **characterized in that** the reference symbols present in only one of the channels are used to estimate the characteristics of the propagation channel.

## Patentansprüche

1. Digitales Kommunikationsverfahren vom Typ mit Mehrfachzugriff und mit Verteilung durch Codes, bei dem ein Zweikomponenten-Signal gesendet wird:
wobei eine erste Komponente durch Spektrumsspreizung von ersten Symbolen mittels erster Pseudo-Zufallssequenzen und Modulation eines ersten, mit einem Referenzträger gleichphasigen Trägers erhalten wird, wobei diese erste Komponente phasengleich genannt und mit I bezeichnet wird,
wobei eine zweite Komponente durch Spektrumsspreizung von zweiten Symbolen durch zweite Pseudo-Zufallssequenzen und durch Modulation eines zweiten, um 90° gegenüber dem Referenzträger phasenverschobenen Phasenträgers erhalten wird, wobei diese zweite Komponente um 90° phasenverschoben genannt und mit Q bezeichnet wird,
wobei die Symbole Informationssymbole (Si) und Referenzsymbole (Sr) umfassen, und wobei
das Verfahren **dadurch gekennzeichnet ist, dass** die Referenzsymbole (Sr) in nur einer der beiden Komponenten I oder Q verteilt werden, und dass sich die ersten, zur Komponente I gehörigen Pseudo-Zufallssequenzen von den zweiten, zur Komponente Q gehörigen Pseudo-Zufallssequenzen unterscheiden.

2. Verfahren gemäß Anspruch 1, bei dem die Referenz Symbole (Sr) in Gruppen mehrerer Symbole verteilt werden.

3. Verfahren gemäß Anspruch 1, bei dem die Referenzsymbole (Sr) einzeln verteilt werden.

4. Verfahren gemäß einem der vorangehenden Ansprüche 1 bis 3, bei dem die Referenzsymbole innerhalb einer Energiesteuerperiode (PCP = période de contrôle de puissance) verteilt werden.

5. Digitales Kommunikationsverfahren vom Typ mit Mehrfachzugriff und mit Verteilung durch Codes, bei dem ein nach dem Verfahren gemäß Anspruch 1 gesendetes Signal auf zwei verschiedenen Wegen I und Q mittels unterschiedlicher Pseudo-Zufallssequenzen, die jeweils den beim Senden verwendeten ersten und zweiten Sequenzen entsprechen, verarbeitet wird,
**dadurch gekennzeichnet, dass** die auf nur einem der Wege vorhandenen Referenzsymbole zur Einschätzung der Eigenschaften des Übertragungskanals verwendet werden.
